# EUROPÄISCHE PATENTANMELDUNG

(11) **EP 3 115 855 A1**
(43) Veröffentlichungstag der Anmeldung: **11.01.2017**
(21) Anmeldenummer: 15175847.1
(22) Anmeldetag: 08.07.2015
(51) Int. Cl.: G05B 19/05, G05B 19/418, G06F 3/048, G06F 17/30, H04L 29/08

(54) **VERFAHREN FÜR DEN BETRIEB EINER PROZESSTECHNISCHEN ANLAGE SOWIE EINE VORRICHTUNG**

(71) Anmelder: Siemens Aktiengesellschaft, 80333 München (DE)
(72) Erfinder: Lutz, Benjamin, 76327 Pfinztal (DE)

(57) **Zusammenfassung**

Die Erfindung betrifft ein Verfahren für den Betrieb einer prozesstechnischen Anlage nach dem Oberbegriff des Anspruchs 1, mit den folgenden Schritten:
- Automatisierte Übertragung der zumindest zweiten Anlagenbilder (11b) in Verbindung mit der Anmeldung eines Operators (13) an der Operatorstation an den ersten OS-Server (10a),
- Lokales Speichern der zumindest zweiten Anlagenbilder (11b) auf dem ersten OS-Server (10a), so dass eine schnellere Bereitstellung der zumindest zweiten Anlagenbilder (11b) bei einem Anlagenbildwechsel (26) von den auf der Operatorstation angezeigten ersten Anlagenbildern (11a) auf die anzuzeigenden zweiten Anlagenbilder (11b) ermöglicht wird.

Zudem betrifft die Erfindung eine Vorrichtung.

## Beschreibung

Die Erfindung betrifft ein Verfahren für den Betrieb einer prozesstechnischen Anlage umfassend zumindest eine erste Automatisierungsstation und eine zweite Automatisierungsstation, sowie zumindest einen ersten OS-Server und zumindest einen zweiten OS-Server und eine Operatorstation, wobei die zumindest erste Automatisierungsstation mit dem ersten OS-Server und die zumindest zweite Automatisierungsstation mit dem zweiten OS-Server verschaltet wird, und wobei ein Datentransfermittel vorgesehen ist, wobei der erste OS-Server mit dem zweiten OS-Server über das Datentransfermittel verschaltet wird und wobei die Operatorstation bei Betrieb mit dem ersten OS-Server lokal verbunden wird und wobei der erste lokal verbundene OS-Server, auf der Operatorstation anzeigbare erste Anlagenbilder aufweist, und der zweite OS-Server auf der Operatorstation anzeigbare zweite Anlagenbilder aufweist. Zudem betrifft die Erfindung eine Vorrichtung, welche sich insbesondere dazu eignet, das erfindungsgemäße Verfahren durchzuführen.

Zur Bedienung und Beobachtung von Prozessleitsystemen werden Anlagenbilder verwendet, auf Basis derer ein Operator an einem OS-Client mit der Anlage interagieren kann. In einem Leitsystem werden zudem Anlagen in Teilanlagen strukturiert. Jede Teilanlage setzt sich aus einer oder mehreren Automatisierungsstationen und einem Operator Station Server (OS-Server) zusammen. Die Anlagenbilder für das Bedienen und Beobachten der Teilanlage liegen auf dem der Teilanlage zugeordneten OS-Server. Meldet sich ein Operator mit einem OS-Client an einer Anlage an, verbindet sich dieser OS-Client mit einem ersten OS-Server, nachfolgend auch Vorzugs-OS-Server genannt. Die lokal auf dem OS-Server liegenden Anlagenbilder stehen dem OS-Client für eine Visualisierung unmittelbar zur Verfügung. Vollzieht der Operator am OS-Client einen Anlagenbildwechsel auf ein Anlagenbild einer anderen Teilanlage, welches sich auf einem anderen OS-Server befindet, so wird das Anlagenbild von dem jeweiligen OS-Server bezogen und lokal in einen flüchtigen Cache gelegt.

Alle Anlagenbilder, welche durch einen OS-Client / Operator benötigt werden und sich nicht auf dem lokalen OS-Server befinden, müssen bei einem Anlagenbildwechsel bezogen werden. Dies ist der Fall, wenn beispielsweise ein Anlagenbild nicht im lokalen OS-Server vorhanden ist und erstmalig benötigt wird oder ein Anlagenbild nach dem erstmaligen Aufruf im Zuge einer Cache-Bereinigung nicht mehr im OS-Server lokal vorhanden ist und neu bezogen werden muss.

Bei einem Anlagenbildwechsel durch den Operator muss jedoch möglichst schnell das angeforderte Anlagenbild geladen und angezeigt werden, so dass das Bedienen und Beobachten nicht beeinträchtigt wird. Wenn nun erst nach einer Anlagenbildwechselanforderung durch den Operator das Anlagenbild von einem anderen OS-Server auf den lokalen OS-Server geladen werden muss, wird die Anlagenbildwechselzeit wahrnehmbar verlangsamt. Zudem können die Anlagenbildwechselzeiten zwischen lokalen und verteilten Anlagenbildern stark variieren - ein Verhalten, welches störend durch den Operator wahrgenommen und unter Umständen auch als Fehler interpretiert werden kann.

Eine erste Aufgabe der Erfindung ist daher die Angabe eines Verfahrens für den Betrieb einer prozesstechnischen Anlage, insbesondere eines Leitsystems, welches das oben genannte Problem löst. Eine zweite Aufgabe liegt in der Angabe einer Vorrichtung, welche das oben genannte Problem löst und welche dazu geeignet ist, das erfindungsgemäße Verfahren durchzuführen.

Die erste Aufgabe wird gelöst durch die Angabe eines Verfahrens für den Betrieb einer prozesstechnischen Anlage umfassend zumindest eine erste Automatisierungsstation und eine zweite Automatisierungsstation, sowie zumindest einen ersten OS-Server und zumindest einen zweiten OS-Server und eine Operatorstation, wobei die zumindest erste Automatisierungsstation mit dem ersten OS-Server und die zumindest zweite Automatisierungsstation mit dem zweiten OS-Server verschaltet wird, und wobei ein Datentransfermittel vorgesehen ist , wobei der erste OS-Server mit dem zweiten OS-Server über das Datentransfermittel verschaltet wird und wobei die Operatorstation bei Betrieb mit dem ersten OS-Server lokal verbunden wird und wobei der erste lokal verbundene OS-Server, auf der Operatorstation anzeigbare erste Anlagenbilder aufweist, und der zweite OS-Server auf der Operatorstation anzeigbare zweite Anlagenbilder aufweist, mit den folgenden Schritten:
- Automatisiertes Übertragung der zumindest zweiten Anlagenbilder in Verbindung mit der Anmeldung eines Operators an der Operatorstation an den ersten OS-Server,
- Lokales Speichern der zumindest zweiten Anlagenbilder auf dem ersten OS-Server, so dass eine schnellere Bereitstellung der zumindest zweiten Anlagenbilder bei einem Anlagenbildwechsel von den auf der Operatorstation angezeigten ersten Anlagenbildern auf die anzuzeigenden zweiten Anlagenbilder ermöglicht wird.

Die zweite Aufgabe wird gelöst durch die Angabe einer Vorrichtung zum Betrieb einer prozesstechnischen Anlage umfassend zumindest eine erste Automatisierungsstation und zumindest eine zweite Automatisierungsstation, sowie zumindest einen ersten OS-Server und zumindest einen zweiten OS-Server und eine Operatorstation, wobei die zumindest erste Automatisierungsstation mit dem ersten OS-Server und die zumindest zweite Automatisierungsstation mit dem zweiten OS-Server verschaltet ist und wobei ein Datentransfermittel vorgesehen ist, wobei der erste OS-Server mit dem zweiten OS-Server über das Datentransfermittel verschaltet ist und wobei die Operatorstation bei Betrieb mit dem ersten OS-Server lokal verbunden ist und wobei der erste lokal verbundene OS-Server, auf der Operatorstation anzeigbare erste Anlagenbilder umfasst, und der zweite OS-Server auf der Operatorstation anzeigbare zweite Anlagenbilder umfasst, wobei eine automatisierte Übertragung der zumindest zweiten Anlagenbilder in Verbindung mit der Anmeldung eines Operators an der Operatorstation an den ersten OS-Server und ein lokales Speichern der zumindest zweiten Anlagenbilder auf dem ersten OS-Server vorgesehen ist, so dass eine schnellere Bereitstellung der zumindest zweiten Anlagenbilder bei einem Anlagenbildwechsel von den auf der Operatorstation angezeigten ersten Anlagenbilder auf die anzuzeigenden zweiten Anlagenbilder ermöglichbar ist.

Dabei bedeutet, dass bereits bei Anmeldung des Operators oder unmittelbar nach der Anmeldung des Operators eine automatisierte Übertragung der zweiten Anlagenbilder stattfindet.

Durch das erfindungsgemäße Verfahren wird eine Beschleunigung der Bildwechselzeiten beim Bezug von nicht auf dem OS-Server lokal gespeicherten Anlagenbildern durch den Operator beim Betrieb der Anlage erreicht. Hierbei werden Operatorprofile genutzt, welche initial aus den Zugriffsrechten des angemeldeten Operators abgeleitet und im Laufe des Betriebs durch das Operatorverhalten dynamisch optimiert werden.

Bevor ein Operator eine Anlage bedienen und beobachten kann, muss er sich initial authentifizieren. Hierbei sind beim Einloggen für gewöhnlich der Name und ein Passwort erforderlich. Nach einer erfolgreichen Authentifizierung findet der eigentliche Anmeldevorgang an einem OS-Server statt. Hierbei werden einer von der Login Komponente erhaltene Zugriffsrechte an z.B. den Access Control Baustein des OS-Servers übergeben. Der Access Control Baustein lädt nun die Zugriffsrechte des angemeldeten Operators und die mit ihm verknüpften Rollen. In den Zugriffsrechten wird unter anderem festgehalten, welche Anlagenbilder von dem angemeldeten Operatoren angewählt werden dürfen und welche nicht. Darüber hinaus wird auch ein persönliches Anwenderprofil geladen. Im Anwenderprofil sind persönliche Einstellungen der grafischen Oberfläche enthalten, wie beispielsweise Schriftgröße, Farbgebung und/oder Fensterbreite. Nun verbindet sich die Operatorstation lokal mit einem ersten OS-Server, dem sogenannten Vorzugs-OS-Server. Dabei kann die Operatorstation als ein OS-Client ausgebildet sein.

Erfindungsgemäß werden die Zugriffsrechte zusammen mit einem modifizierbaren und erweiterten Anwenderprofil genutzt, um proaktiv - bereits bei einer Anmeldung des Operators - alle Anlagenbilder in diesem ersten OS-Server lokal zu laden, so dass diese bei einem Anlagenbildwechsel bereits vorhanden sind und nicht erst noch geladen werden müssen. Hierdurch können die Anlagenbildwechselzeiten anwenderspezifisch deutlich verbessert werden.

Durch die Erfindung ergibt sich eine im Betrieb leistungsfähigere und reaktivere Anlage, insbesondere ein Leitsystem, mit anwenderspezifisch verbesserten Anlagenbildwechselzeiten. Zudem ergibt sich eine Verbesserung der Benutzerfreundlichkeit aus Sicht des Operators.

In den Unteransprüchen sind weitere vorteilhafte Maßnahmen aufgelistet, die beliebig miteinander kombiniert werden können, um weitere Vorteile zu erzielen.

Bevorzugt werden die zweiten Anlagenbilder in priorisierter Reihenfolge an den ersten OS-Server übertragen. Alternativ oder zusätzlich werden die zweiten Anlagenbilder in priorisierter Reihenfolge in dem ersten OS-Server gespeichert. In einer bevorzugten Ausgestaltung wird die priorisierte Reihenfolge für jede Anmeldung eines Operators neu bestimmt. Alternativ kann die priorisierte Reihenfolge auch erst nach mehreren Anzahlen von Anmeldung des Operators neu bestimmt werden.

Hierdurch können die Bildwechselzeiten anwenderspezifisch - da priorisiert - deutlich verbessert werden. Durch das proaktive priorisierte Laden der Anlagenbilder auf den OS-Server, an dem sich der Operator gerade anmeldet, erhöht sich die Wahrscheinlichkeit, dass das vom Operator benötigte Anlagenbild im Cache liegt, wenn er es benötigt - die Bildwechselzeiten werden dadurch minimiert. Berücksichtigt man, dass für das Bedienen und Beobachten einer Anlage unter Umstanden hunderte Bilder vorhanden sind, so wird deutlich, dass eine priorisierte und für den Anwender optimierte Ladereihenfolge einen positiven Effekt auf die durch den Operator wahrnehmbaren Bildwechselzeiten hat.

In besonderer Ausgestaltung werden die zweiten Anlagenbilder in Abhängigkeit von einem Operatorprofil, insbesondere von den Operatorzugriffsrechten, übertragen. Bevorzugt weist der erste OS-Server einen ersten Cache auf, indem die zweiten Anlagenbilder übertragen und/oder gespeichert werden.

Hier werden die Zugriffsrechte zusammen mit einem modifizierbaren und erweiterten Operatorprofil genutzt, um proaktiv - bereits bei einer Anmeldung des Operators - alle Anlagenbilder in einer priorisierten Reihenfolge in den lokalen Cache des OS-Servers zu laden, so dass diese bei einem Anlagenbildwechsel bereits vorhanden sind und nicht erst noch geladen werden müssen. Meldet sich ein Anwender über einen Operatorstation an der Anlage, z.B. an einem Leitsystem an, erhält dieser z.B. durch die User Management Komponente ein Berechtigungszertifikat. Das Berechtigungszertifikat wird beim Öffnen des Anlagenbildes an den OS-Server übergeben. Die Anlagenbildvisualisierung auf dem OS-Server übergibt das Berechtigungszertifikat an den Access Control Baustein, der entscheidet, ob der angemeldete Anwender überhaupt entsprechende Zugriffsrechte für das Anlagenbild besitzt. Sind Zugriffsrechte vorhanden, wird das zu öffnende Anlagenbild über einen sogenannten CDS (Configuration Data Service) angefordert. Befindet sich das Anlagenbild nicht lokal auf dem OS-Server, wird das Anlagenbild von dem anderen OS-Server geladen. Zudem können die zuvor genannten Daten des Operatorprofils bei einer Anmeldung ebenfalls geladen werden.

Bevorzugt weist das erfindungsgemäße Verfahren für den Betrieb einer prozesstechnischen Anlage folgende Schritte auf:
- Bestimmung der Anzahl und der Anlagenbildauswahl, die während eines vorangegangenen Betriebs der Operatorstation durch den Operator angewählten Anlagenbilder, und Bestimmung eines Anlagenbildanwahlwerts aus dieser Anzahl und des Anlagenbildauswahl,
- Speicherung der Anzeigendauer des jeweils ausgewählten Anlagenbildes während eines Betriebs der Operatorstation durch den Operator,
- Bestimmung einer priorisierter Reihenfolge aus der Dauer des ausgewählten Anlagenbildes und des Anlagenbildanwahlwerts, und
- Automatisierte Übertragung der zumindest zweiten Anlagenbilder in dieser priorisierter Reihenfolge an den ersten OS-Server bei neuer Anmeldung des Operators an der Operatorstation.

Bevorzugt wird dabei die Anlagenbildauswahl nur dann gespeichert, wenn der Operator ein Operatorzugriffrecht zu dieser Anlagenbildauswahl aufweist. Zudem wird der Anlagenbildanwahlwert durch den Quotient aus durch den Operator ausgewählten Anlagenbildern zu den auswählbaren Anlagenbilder gebildet.

Um proaktiv und priorisiert die durch den Anwender benötigten zweiten Anlagenbilder zu laden, wird zunächst in einem ersten Schritt die Anzahl der Bildanwahlen festgelegt. Während der Operator angemeldet ist, wird festgehalten, wie oft dieser die für ihn berechtigen Anlagenbilder angewählt hat. Berechnet wird anschließend ein normierter Anlagenbildanwahlwert. Dieser ergibt sich aus den Quotienten von allen angewählten Anlagenbildanwahlen durch die zur Verfügung stehenden Anlagenbilder. Ferner wird die Anzeigendauer des jeweils ausgewählten Anlagenbildes festgestellt und gespeichert. Während der Operator angemeldet ist, wird daher festgehalten, wie lange das jeweilige Anlagenbild geöffnet war. Berechnet wird hierbei ebenfalls ein normierter Wert, nämlich die Anzeigendauer (Zeit angemeldet / Zeit Anlagenbild geöffnet). Anhand der ermittelten Größen "Anlagenbildanwahlwert" und "Anzeigendauer" wird eine Priorität für jedes Anlagenbild berechnet. Die Priorität bestimmt, in welcher Reihenfolge die Anlagenbilder in den Cache des ersten OS-Servers unmittelbar nach der erneuten Anmeldung durch denselben Operator geladen werden.

Geladen werden natürlich nur diejenigen Anlagenbilder, die nicht lokal am angemeldeten ersten OS-Server vorhanden sind. Dies sind in der Regel die zweiten Anlagenbilder.

Bevorzugt erfolgt die Übertragung unmittelbar nach der Anmeldung des Operators an der Operatorstation, d.h. nach der Passworteingabe, sozusagen noch während die Operatorstation die Einstellungen lädt.

Bevorzugt ist die Operatorstation als OS-Client ausgeführt. In einer weiteren Ausgestaltung ist ein Profile Management Baustein vorgesehen, welcher jeden vom Operator herbeigeführten Anlagenbildwechsel speichert. Zudem können im Profile Management Baustein die Anzahl und die Anlagenbildauswahl gespeichert werden, die während eines Betriebs der Operatorstation durch den Operator angewählten Anlagenbilder bestimmt werden, wobei aus der Anzahl und der Anlagenbildauswahl ein Anlagenbildanwahlwert generierbar ist. Zudem ist im Profile Management Baustein eine Speicherung der Anzeigendauer des jeweils ausgewählten Anlagenbildes während eines Betriebs vorgesehen, als auch eine Bestimmung einer priorisierten Reihenfolge aus der Anzeigendauer des ausgewählten Anlagenbildes und des Anlagenbildanwahlwerts, sowie eine automatisierte Übertragung der zumindest zweiten Anlagenbilder in dieser priorisierter Reihenfolge an den ersten OS-Server durch den Profile Management Baustein bei einer neuen Anmeldung des Operators an der Operatorstation.

Der Profile Management Baustein wird über jede Anmeldung eines Operators und über seine spezifischen Zugriffsrechte von dem Access Control Baustein informiert. Darüber hinaus empfängt das Profile Management Baustein jeden vom Operator herbeigeführten Anlagenbildwechsel, um das Operatorverhalten beobachten zu können. Zudem ist der Profile Management Baustein auch in der Lage um z.B. unmittelbar nach der Anmeldung des Operators proaktiv alle Anlagenbilder in einer priorisierten Reihenfolge in den Cache des ersten OS-Servers laden zu lassen. Darüber hinaus kann auch die Bereinigung des Caches durch den Profile Management Baustein beeinflusst werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: ein Beispiel einer Automatisierungslösung bestehend aus einer prozesstechnischen Anlage mit einem Automatisierungssystem,
- FIG 2: erfindungsgemäße Architektur eines OS-Servers zur Verbesserung der Bildwechselzeiten, und
- FIG 3: Bedien- und Beobachtungsverhaltens eines Operators.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

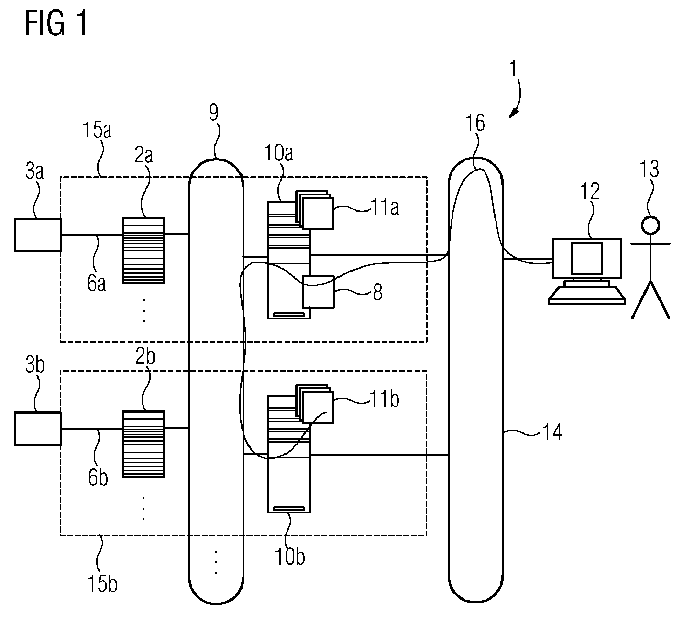

FIG 1 zeigt in einfacher schematischer Darstellung ein Beispiel für eine technische Anlage, z.B. ein Leitsystem 1, in der ein Prozess abläuft und zumindest mittels einer ersten Automatisierungsstation 2a und einer zweiten Automatisierungsstation 2b gesteuert wird. Dabei können die Automatisierungsstationen 2a, 2b als speicherprogrammierbare Steuerungen ausgestaltet sein. Die Automatisierungsstationen 2a,2b weisen eine Vielzahl von prozessnahen Komponenten (Feldgeräte) 3a,3b auf, die auf Feldebene also in dem Prozess, vorgegebene MESZ-,Steuer- und Regelungsfunktionen wahrnehmen und dabei insbesondere Messgrößen aus dem Prozess erfassen und durch Stelleingriffe auf den Prozess einwirken. Bei den Feldgeräten 3a, 3b kann es sich um Sensoren, Aktoren, Messumformer, Analysegeräte, Antriebe usw. handeln. Die Feldgeräte 3a, 3b tauschen über ein in der Regel drahtgebundenes Kommunikationssystem prozess-, funktions- und/oder gerätrelevante Daten aus. Dazu sind die Feldgeräte 3a, 3b über z.B. einen Feldbus 6a, 6b an die erste und zweite Automatisierungsstation 2a, 2b angeschlossen. Die Automatisierungsstationen 2a, 2b sind dabei über an einen zentralen Anlagenbus 9 an einen ersten OS-Server 10a und einen zweiten OS-Server 10b angeschlossen. Die OS-Server 10a, 10b sind zudem über den Anlagenbus 9 miteinander verbunden. In den OS-Servern 10a, 10b ist in einem Speicher ein Prozessabbild in Form von Daten gespeichert. Die OS-Server 10a, 10b weisen zudem eine Runtime-Software auf, z.B. zum kommunizieren mit den Automatisierungsstationen 2a, 2b.

Ferner ist eine von einem Operator 13 bedienbare Operation Station, die zumeist als OS-Client 12 ausgebildet ist, vorgesehen, welche über einen Terminalbus 14 mit den OS-Servern 10a, 10b verbunden ist. Zur Bedienung und Beobachtung von einem Prozessleitsystemen 1 werden Anlagenbilder 11a, 11b verwendet, auf Basis derer der Operator 13 an dem OS-Client 12 mit der Anlage interagieren kann.

D.h. in einem Leitsystem 1 sind die Anlagen in Teilanlagen 15a, 15b strukturiert. Jede Teilanlage 15a, 15b setzt sich aus zumindest einer ersten Automatisierungsstation 2a und einer zweiten Automatisierungsstation 2b und dem ersten OS-Server 10a und zweiten OS-Server 10b zusammen. Die Anlagenbilder 11a, 11b für das Bedienen und Beobachten der Teilanlage 15a, 15b liegen auf dem der Teilanlage 15a, 15b zugeordneten OS-Server 10a, 10b. Meldet sich ein Operator 13 mit einem OS-Client 12 an einer Anlage an, verbindet sich dieser OS-Client 12 mit einem Vorzugs-OS-Server, hier nur beispielsweise der erste OS-Server 10a der Anlage. Die lokal auf dem ersten OS-Server 10a liegenden Anlagenbilder 11a stehen dem OS-Client 12 für eine Visualisierung unmittelbar zur Verfügung.

Vollzieht der Operator 13 am OS-Client 12 einen Anlagenbildwechsel auf ein Anlagenbild einer anderen Teilanlage, hier z.B. der Teilanlage 15b, welches sich auf dem anderen OS-Server 10b befindet, so wird das Anlagenbild 11b von dem jeweiligen ersten OS-Server 10a bezogen (Bezugsweg 16) und lokal in einen flüchtigen Cache 8 gelegt. Im Leitsystem 1 wird durch eine verwendete Runtime-Plattform ein Service der CDS, dem Configuration Data Service, bereitgestellt, mit dem die Anlagenbilder 11b in dem zweiten OS-Server 10b durch einen anderen OS-Server 10a bezogen werden können.

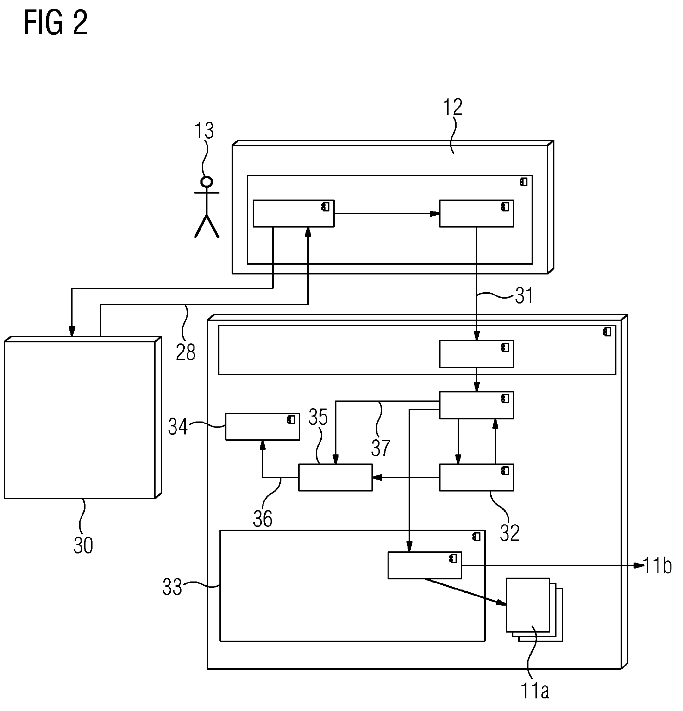

FIG 2 zeigt die Architektur eines OS-Servers 10a, 10b. Meldet sich ein Operator 13 über einen OS-Client 12 über z.B. ein Password/Username am Leitsystem 1 an, erhält dieser durch die User Management Komponente 30 einen Berechtigungszugriff 28. Der Berechtigungszugriff 28 wird beim Öffnen des Anlagenbildes an der OS-Server 10a (FIG 1) übergeben, 31. Die Anlagenbild-Visualisierung auf dem OS-Server 10a (FIG 1) übergibt den Berechtigungszugriff 28 an eine Access Control Baustein 32, der entscheidet, ob der angemeldete Operator 13 überhaupt entsprechende Zugriffsrechte für das Anlagenbild 11b besitzt. Sind Zugriffsrechte vorhanden, wird das zu öffnende Anlagenbild 11b über den CDS (Configuration Data Service) 33 angefordert. Befindet sich das Anlagenbild 11b nicht lokal auf dem OS-Server 10a (FIG 1), bzw. im Cache des CDS, lädt der CDS 33 das Anlagenbild 11b von einem anderen OS-Server 10b (FIG 1). In Operatorprofil 34 sind die zuvor genannten Daten des Operators 13 abgelegt, die bei einer Anmeldung ebenfalls geladen werden. Ein erfindungsgemäßer Profile Management Baustein 35 wird über jede Anmeldung eines Operators 13 und über seine spezifischen Bild-Zugriffsrechte von dem Access Control Baustein 32 informiert (Übertragung 36).

Darüber hinaus empfängt der Profile Management Baustein 35 jeden vom Operator 13 herbeigeführten Bildwechsel (Übertragung 37), um das Operatorverhalten beobachten zu können. Darüber hinaus ist der Profile Management Baustein 35 auch in der Lage mit dem CDS 33 zu kommunizieren, um bei oder unmittelbar nach der Anmeldung des Operator 13 proaktiv alle Anlagenbilder 11b in einer priorisierten Reihenfolge in den Cache 8 (FIG 1) laden zu lassen.

Darüber hinaus kann auch die Bereinigung des Caches 8 (FIG 1) durch den Profile Management Baustein 35 beeinflusst werden.

Um proaktiv und priorisiert die durch den Anwender benötigten Anlagenbilder zu laden, werden folgende Schritte durchgeführt:
1. Bestimmung eines Anlagenbildanwahlwerts: Während der Operator 13 angemeldet ist, wird im Profile Management Baustein 35 festgehalten, wie oft dieser die für ihn berechtigen Anlagenbilder angewählt hat. Berechnet wird hierbei ein normierter Wert: alle durch den Operator ausgewählten Anlagenbilder / Anzahl der auswählbaren Anlagenbilder.
2. Bestimmung der Anzeigendauer: Während der Operator 13 angemeldet ist, wird festgehalten, wie lange das jeweilige Anlagenbild geöffnet war. Berechnet wird hierbei ein normierter Wert (Zeit angemeldet / Zeit Bild geöffnet).
3. Bildpriorität: Anhand der ermittelten Größen "Anlagenbildanwahlwert" und " Anzeigendauer " wird eine Priorität für jedes Anlagenbild berechnet. Die Priorität bestimmt, in welcher Reihenfolge die Anlagenbilder in den Cache 8 (FIG 1) des OS-Servers 10a unmittelbar nach oder bei der Anmeldung geladen werden. Geladen werden natürlich nur die Anlagenbilder, die nicht lokal am angemeldeten OS-Server 10a vorhanden sind.

Vorteilhafterweise ergibt sich daraus ein im Betrieb leistungsfähigeres und reaktiveres Leitsystem mit anwenderspezifisch verbesserten Anlagenbildwechselzeiten. Zudem ergibt sich eine Reduktion des Kommunikationsaufkommens zwischen den OS-Servern 10a, 10b, da ein durch die Cachebereinigung bedingtes wiederholtes Laden von Anlagenbildern entfällt. Zudem ergibt sich eine Verbesserung der Operatorbedienung aus Sicht des Operators 13.

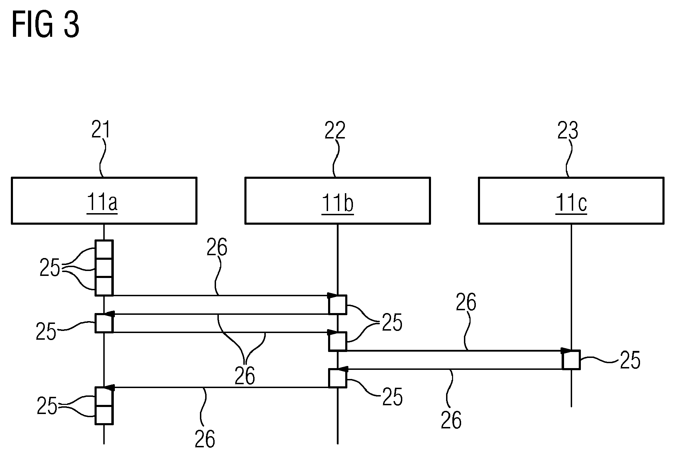

In FIG 3 ist das Bedien- und Beobachtungsverhaltens eines Operators 13 (FIG 2) exemplarisch und grafisch dargestellt. Dabei sind erste Analgenbilder 11a auf einem Screen 21, zweite Anlagenbilder 11b auf einem Screen 22 und dritte Anlangebilder 11c auf einem Screen 23 vorhanden. Pfeile z.B. vom ersten Screen 21 zum zweiten Screen 22 bedeutet einen Anlagenbildwechsel 26 z.B. von Screen 21 nach Screen 22. Hier in dem Beispiel wurden daher sechs Anlagenbildwechsel (26, sechs Pfeile) vorgenommen. Zeitdauern 25, in denen die jeweiligen Anlagenbilder 11a-11c, d.h. der jeweilige Screen 21-23 geöffnet war, sind dabei als einzelne Kästchen dargestellt. Hier in diesem Beispiel wurden daher zehn Zeitdauern 25 (zehn Kästchen) vorgenommen.

Das in FIG 3 dargestellt Nutzerverhalten wird durch den Profile Management Baustein 35 (FIG 2) gemessen und verarbeitet. Die Verarbeitung ist exemplarisch in folgender Tabelle zu sehen, wobei Anlagenbilder in der Tabelle mit AB abgekürzt ist:

| | 1 | 2 | 3 | 4 | 5 |
|---|---|---|---|---|---|
| 1 | Screens/ Anlagenbilder(=AB) | Screen 21/ AB 11a | Screen 22/ AB 11b | Screen 23/ AB 11c | Screen 24/ AB 11d |
| 2 | AccessControl: (Zugriffsrecht: ja=1 / nein=0) | 1 | 1 | 1 | 0 |
| 3 | Anlagenbildanwahlwert (Operator 13) | 0,33 | 0,50 | 0,16 | 0 |
| 4 | Zeitdauer | 0, 6 | 0,3 | 0, 1 | 0 |
| 5 | Bildpriorität / prio. Reihenfolge | 0,21 | 0,15 | 0,016 | 0 |

Durch den Access Control Baustein 32 (FIG 2), d.h. die Zugriffskomponente ist bekannt, welche Anlagenbilder 11a-11d überhaupt durch den angemeldeten Operator 13 (FIG 2) geöffnet werden dürfen. So ist aus obiger Tabelle Zeile 2, Spalte 2-4 zu erkennen, dass der Operator 13 (FIG 2) hier die Anlagenbilder 11a-11c verwenden darf, und somit auf die Darstellung der Screens 21-23 zugreifen darf. Die Anlagenbilder 11d werden jedoch durch die auf ihn abgestimmten Zugriffsrechte für ihn gesperrt. In Zeile 3, Spalte 2-4 der Tabelle ist der normierte Anlagenbildanwahlwert für die Anlagenbilder 11a-11c, d.h. jeden Screen 21-23, durch den Operator 13 festgehalten. So hat hier der Operator 13 beispielsweise von insgesamt sechs Bildwechseln 26 dreimal die Anlagenbilder 11b auf Screen 22 angewählt (3/6=0.5). In Zeile 4 ist normiert festgehalten, wie lange der Operator 13 (FIG 1) das jeweilige Anlagenbild geöffnet hatte. So sind hier von insgesamt zehn Zeitdauern 26 bei sechs Zeitdauern 26 die Anlagenbilder 11a auf Screen 21 geöffnet (6/10=0.6). Beim der Abmeldung des Operators 13 wird von dem Profile Management Baustein 35 (FIG 2) die Priorisierung der Ladereihenfolge der Anlagenbilder 11a-11c für die nächste Anmeldung des Operators 13 berechnet und im Profile Management Baustein 35 (FIG 2) abgelegt. Hierbei werden in der Tabelle die Zeilen 2-4 miteinander multipliziert; dies ist in der Zeile 5 Spalte 3-6 zu erkennen. So werden zunächst die Anlagebilder 11a-11c mit dem höchsten Wert geladen. Bei der nächsten Anmeldung des Operators 13 wird demnach proaktiv zuerst die Anlagenbilder 11a auf Screen 21, dann die Anlagenbilder 11b auf Screen 22 und letztendlich die Anlagenbilder 11c auf Screen 23 in den lokalen Cache 8 (FIG 1) des OS-Servers 10a (FIG 1) geladen, falls die jeweiligen Anlagenbilder 11a-11c nicht lokal auf dem OS-Server 10a (FIG 1) vorhanden sind. Dies ist hier bei den Anlagenbildern 11a jedoch der Fall, so dass bei Anmeldung des Operators 13 am OS-Client 12 lediglich die Anlagenbilder 11b und die Anlagenbilder 11c zu laden sind. Durch das proaktive priorisierte Laden der Anlagenbilder 11b, 11c auf den OS-Server 10a (FIG 1) an dem sich der Operator 13 (FIG 1) gerade anmeldet, erhöht sich die Wahrscheinlichkeit, dass das vom Operator 13 (FIG 2) benötigt Anlagenbild 11b,11c im Cache 8 (FIG 1) liegt, wenn er es benötigt - die Bildwechselzeiten werden für den Operator 13 (FIG 2) minimiert.

Die Zugriffsrechte (Zeile 2 der Tabelle) werden genutzt, um die Bereinigung des Cache 8 des lokalen ersten OS-Servers 10a zu beeinflussen. Jedes Anlagenbild 11a-11d bei dem in Zeile 2 eine Eins steht, wird bei einer Bereinigung des Cache 8 nicht gelöscht. Für das Bedienen und Beobachten einer Anlage sind unter Umstanden hunderte Bilder vorhanden, so dass eine priorisierte und für den Operator 13 optimierte priorisierter Reihenfolge einen positiven Effekt auf die durch den Operator 13 (FIG 2) wahrnehmbaren Bildwechselzeiten hat.

Hier werden die Zugriffsrechte zusammen mit einem modifizierbaren und erweiterten Profil Management Baustein genutzt, um proaktiv - bereits bei einer Anmeldung des Operators 13 - alle Anlagenbilder 11a-11d in einer priorisierten Reihenfolge in den lokalen Cache 8 (FIG 1) des ersten lokalen OS-Servers 10a zu laden, so dass diese bei einem Anlagenbildwechsel 26 bereits vorhanden sind und nicht erst noch geladen werden müssen. Hierdurch können die Bildwechselzeiten anwenderspezifisch - da priorisiert - deutlich verbessert werden. Darüber hinaus wird eine Bereinigung des Cache 8 (FIG 1) insofern beeinflusst, als dass diese die vom angemeldeten Operator 13 gemäß des Profil Management Bausteins und der Zugriffsrechte verwendeten Anlagenbilder 11a-11d von der Bereinigung ausschließt. Durch die Erfindung ist ein anwenderprofilorientiertes und proaktives Puffern von Anlagenbildern in Operator Stations möglich.

## Patentansprüche

1. Verfahren für den Betrieb einer prozesstechnischen Anlage umfassend zumindest eine erste Automatisierungsstation (2a) und zumindest eine zweite Automatisierungsstation (2b), sowie zumindest einen ersten OS-Server (10a) und zumindest einen zweiten OS-Server (10b) und eine Operatorstation, wobei die zumindest erste Automatisierungsstation (2a) mit dem ersten OS-Server (10a) und die zumindest zweite Automatisierungsstation (2b) mit dem zweiten OS-Server (10b) verschaltet wird und wobei ein Datentransfermittel vorgesehen ist, wobei der erste OS-Server (10a) mit dem zweiten OS-Server (10b) über das Datentransfermittel verschaltet wird und wobei die Operatorstation bei Betrieb mit dem ersten OS-Server (10a) lokal verbunden wird und wobei der erste lokal verbundene OS-Server (10a) auf der Operatorstation anzeigbare erste Anlagenbilder (11a) aufweist, und der zweite OS-Server (10b) auf der Operatorstation anzeigbare zweite Anlagenbilder (11b) aufweist,
**gekennzeichnet durch** folgende Schritte:
- Automatisierte Übertragung der zumindest zweiten Anlagenbilder (11b) in Verbindung mit der Anmeldung eines Operators (13) an der Operatorstation an den ersten OS-Server (10a),
- Lokales Speichern der zumindest zweiten Anlagenbilder (11b) auf dem ersten OS-Server (10a), so dass eine schnellere Bereitstellung der zumindest zweiten Anlagenbilder (11b) bei einem Anlagenbildwechsel (26) von den auf der Operatorstation angezeigten ersten Anlagenbildern (11a) auf die anzuzeigenden zweiten Anlagenbilder (11b) ermöglicht wird.

2. Verfahren für den Betrieb einer prozesstechnischen Anlage nach Anspruch 1,
**dadurch gekennzeichnet, dass** die zweiten Anlagenbilder (11b) in priorisierter Reihenfolge an den ersten OS-Server (10a) übertragen werden.

3. Verfahren für den Betrieb einer prozesstechnischen Anlage nach Anspruch 1 oder 2,
**dadurch gekennzeichnet, dass** die zweiten Anlagenbilder (11b) in priorisierter Reihenfolge in dem ersten OS-Server (10a) gespeichert werden.

4. Verfahren für den Betrieb einer prozesstechnischen Anlage nach einem der vorhergehenden Ansprüche 2-3,
**dadurch gekennzeichnet, dass** die priorisierte Reihenfolge für jede Anmeldung eines Operators (13) neu bestimmt wird.

5. Verfahren für den Betrieb einer prozesstechnischen Anlage nach einem der vorhergehenden Ansprüche 2-3,
**dadurch gekennzeichnet, dass** die priorisierte Reihenfolge erst nach mehreren Anzahlen von Anmeldung des Operators (13) neu bestimmt wird.

6. Verfahren für den Betrieb einer prozesstechnischen Anlage nach einem der vorhergehenden Ansprüche,
**dadurch gekennzeichnet, dass** die zweiten Anlagenbilder (11b) in Abhängigkeit von einem Operatorprofil (34), insbesondere von den Operatorzugriffsrechten, übertragen werden.

7. Verfahren für den Betrieb einer prozesstechnischen Anlage nach einem der vorhergehenden Ansprüche,
**dadurch gekennzeichnet, dass** der erste OS-Server (10a) einen ersten Cache (8) aufweist und die zweiten Anlagenbilder (11b) in diesem ersten Cache (8) übertragen und/oder gespeichert werden.

8. Verfahren für den Betrieb einer prozesstechnischen Anlage nach einem der vorhergehenden Ansprüche,
**gekennzeichnet durch** die folgenden Schritte:
- Bestimmung der Anzahl und der Anlagenbildauswahl, die während eines vorangegangenen Betriebs der Operatorstation **durch** den Operator (13) angewählten Anlagenbilder (11b) und Bestimmung eines Anlagenbildanwahlwerts aus dieser Anzahl und dieser Anlagenbildauswahl,
- Speicherung der Anzeigendauer (25) des jeweils ausgewählten Anlagenbildes während eines Betriebs der Operatorstation **durch** den Operator (13),
- Bestimmung einer priorisierter Reihenfolge aus der Anzeigendauer (25) des ausgewählten Anlagenbildes und des Anlagenbildanwahlwerts, und
- Automatisierte Übertragung der zumindest zweiten Anlagenbilder (11b) in dieser priorisierter Reihenfolge an den ersten OS-Server (10a) bei neuer Anmeldung des Operators (13) an der Operatorstation.

9. Verfahren für den Betrieb einer prozesstechnischen Anlage nach Anspruch 8,
**dadurch gekennzeichnet, dass** die Anlagenbildauswahl nur dann gespeichert wird, wenn der Operator (13) ein Operatorzugriffrecht zu dieser Anlagenbildauswahl aufweist.

10. Verfahren für den Betrieb einer prozesstechnischen Anlage nach Anspruch 8 oder 9,
**dadurch gekennzeichnet, dass** der Anlagenbildanwahlwert durch den Quotienten aus durch den Operator (13) ausgewählten Anlagenbilder zu den auswählbaren Anlagenbildern gebildet wird.

11. Verfahren für den Betrieb einer prozesstechnischen Anlage nach einem der vorhergehenden Ansprüche,
**dadurch gekennzeichnet, dass** die Übertragung unmittelbar nach der Anmeldung des Operators (13) an der Operatorstation erfolgt.

12. Vorrichtung zum Betrieb einer prozesstechnischen Anlage umfassend zumindest eine erste Automatisierungsstation (2a) und zumindest eine zweite Automatisierungsstation (2b), sowie zumindest einen ersten OS-Server (10a) und zumindest einen zweiten OS-Server (10b) und eine Operatorstation, wobei die zumindest erste Automatisierungsstation (2a) mit dem ersten OS-Server (10a) und die zumindest zweite Automatisierungsstation (2b) mit dem zweiten OS-Server (10b) verschaltet ist, und wobei ein Datentransfermittel vorgesehen ist, wobei der erste OS-Server (10a) mit dem zweiten OS-Server (10b) über das Datentransfermittel verschaltet ist und wobei die Operatorstation bei Betrieb mit dem ersten OS-Server (10a) lokal verbunden ist und wobei der erste lokal verbundene OS-Server (10a) auf der Operatorstation anzeigbare erste Anlagenbilder (11a) umfasst, und der zweite OS-Server (10b) auf der Operatorstation anzeigbare zweite Anlagenbilder (11b) umfasst,
**dadurch gekennzeichnet, dass** eine automatisierte Übertragung der zumindest zweiten Anlagenbilder (11b) in Verbindung mit der Anmeldung eines Operators (13) an der Operatorstation an den ersten OS-Server (10a) und ein lokales Speichern der zumindest zweiten Anlagenbilder (11b) auf dem ersten OS-Server (10a) vorgesehen ist, so dass eine schnellere Bereitstellung der zumindest zweiten Anlagenbilder (11b) bei einem Anlagenbildwechsel (26) von den auf der Operatorstation angezeigten ersten Anlagenbilder (11a) auf die anzuzeigenden zweiten Anlagenbilder (11b) ermöglichbar ist.

13. Vorrichtung zum Betrieb einer prozesstechnischen Anlage nach Anspruch 12,
**dadurch gekennzeichnet, dass** die Operatorstation als OS-Client (12) ausgeführt ist.

14. Vorrichtung zum Betrieb einer prozesstechnischen Anlage nach einem der vorhergehenden Ansprüche 12-13,
**dadurch gekennzeichnet, dass** ein Profile Management Baustein (35) vorgesehen ist, welcher jeden vom Operator (13) herbeigeführten Anlagenbildwechsel (26) speichert.

15. Vorrichtung zum Betrieb zum Betrieb einer prozesstechnischen Anlage nach Anspruch 14,
**dadurch gekennzeichnet, dass** im Profile Management Baustein (35) die Anzahl und die Anlagenbildauswahl, die während eines vorangegangenen Betriebs der Operatorstation durch den Operator (13) angewählten Anlagenbilder (11b) bestimmt werden und aus dieser Anzahl und dieser Anlagenbildauswahl ein Anlagenbildanwahlwert generierbar ist, und eine Speicherung der Anzeigendauer (25) des jeweils ausgewählten Anlagenbildes während eines Betriebs der Operatorstation durch den Operator (13) vorgesehen ist, als auch eine Bestimmung einer priorisierter Reihenfolge aus der Anzeigendauer (25) des ausgewählten Anlagenbildes und des Anlagenbildanwahlwerts, sowie eine automatisierte Übertragung der zumindest zweiten Anlagenbilder (11b) in dieser priorisierter Reihenfolge an den ersten OS-Server (10a) durch den Profile Management Baustein (35) bei neuer Anmeldung des Operators (13) an der Operatorstation vorgesehen ist.

16. Vorrichtung zum Betrieb zum Betrieb einer prozesstechnischen Anlage nach einem der vorhergehenden Ansprüche 12-15,
**dadurch gekennzeichnet, dass** der erste OS-Server (10a) einen ersten Cache (8) aufweist und die zweiten Anlagenbilder (11b) in diesem ersten Cache (8) übertragen und/oder speicherbar sind.

17. Vorrichtung zum Betrieb einer prozesstechnischen Anlage nach einem der Ansprüche 12-16 zum Durchführen des Verfahrens nach einem der Ansprüche 1-11.
